# NEUE EUROPÄISCHE PATENTSCHRIFT

(11) **EP 0 978 312 B2**
(45) Veröffentlichungstag und Bekanntmachung des Hinweises auf die Entscheidung über den Einspruch: **18.04.2007**
(45) Hinweis auf die Patenterteilung: 28.07.2004
(21) Anmeldenummer: 99115297.6
(22) Anmeldetag: 03.08.1999
(51) Int. Cl.: B01J 13/18, C08G 12/42, B41M 5/165

(54) **Mikrokapseln aus formaldehydarmen Melamin-Formaldehydharzen**
Microcapsules made of melamine-formaldehyde resins with low formaldehyde content
Microcapsules de résines mélamine formaldehyde ayant un faible contenu en formaldehyde

(30) Priorität: 04.08.1998 DE 19835114
(43) Veröffentlichungstag der Anmeldung: 09.02.2000
(73) Patentinhaber: BASF Aktiengesellschaft, 67056 Ludwigshafen (DE)
(72) Erfinder: Frank, Gabriele, 68229 Mannheim (DE); Biastoch, Ralf, Dr., 67346 Speyer (DE); Kummer, Matthias, Dr., 67273 Weisenheim (DE)

(56) Entgegenhaltungen:
- EP-A- 0 026 914
- EP-A- 0 562 344
- EP-A1- 0 070 528
- EP-A2- 0 385 225
- DE-A- 3 629 714
- GB-A- 2 177 997
- US-A- 4 223 141
- DATABASE WPI Section Ch, Week 198143 Derwent Publications Ltd., London, GB; Class A14, AN 1981-78629D XP002121983 & JP 56 115634 A (MITSUBISHI PAPER MILLS LTD), 10. September 1981 (1981-09-10)
- Beyer-Walter - Lehrbuch der organischen Chemie, vom Wolfgang Beyer (1988) Seiten 204-205
- Beyer-Walter - Lehrbuch der organischen Chemie, von Wolfgang Beyer (1988) Seiten 204-205

## Beschreibung

Die vorliegende Erfindung betrifft ein Verfahren zur Herstellung von Mikrokapseln durch Polykondensation einer Melamin-Formaldehydharzmischung in Wasser, in dem das den Kapselkern bildende Material dispergiert ist, in Gegenwart eines anionischen Schutzkolloids. Weiterhin betrifft sie die nach dem erfindungsgemäßen Verfahren erhaltenen Mikrokapseln und deren Verwendung für druckempfindliche Aufzeichnungssysteme.

Mikrokapseln, die für druckempfindliche Aufzeichnungsmaterialien verwendet werden, müssen dicht sein und auch eine enge Größenverteilung aufweisen, da ansonsten bei ihrer Weiterverarbeitung Mängel bei den Durchschreibepapieren die Folge sind. Daher werden hohe Anforderungen an das Verkapselungsverfahren und die Einsatzstoffe gestellt.

Als Ausgangsstoffe für das Wandmaterial werden in der Regel partiell methylierte Harze aus 1 mol Melamin und 5 bis 6 mol Formaldehyd eingesetzt, da diese zu besonders dichten und gleichmäßigen Kapseln führen.

Solche Harze weisen jedoch einen verhältnismäßig hohen Restformaldehydgehalt auf, den man vermeiden möchte, da die Mikrokapseln oftmals direkt beim Papierhersteller hergestellt werden.

Die EP-A-0 026 914 lehrt ein Verfahren zur Herstellung von Mikrokapseln, bei dem formaldehydärmere Melamin-Formaldehydharze eingesetzt werden.

Die GB-A-2 177 997 beschreibt ein Verhältnis von weniger als 5 Mol Formaldehyd auf 1 Mol Melamin zur Herstellung von Mikrokapseln.

Methylveretherte Melamin-Formaldehydharze die mit einem geringeren Formaldehydanteil hergestellt werden sind aus der EP-A-0 008 683 zur Herstellung von Lacken bekannt. Bei der Verwendung als Ausgangsmaterial für Mikrokapseln sind sie jedoch unbefriedigend, da sie zu ungleichmäßigen Kapselwänden führen.

Daher war es Aufgabe der vorliegenden Erfindung, ein Verfahren zur Herstellung von Mikrokapseln bereitzustellen, das eine geringere Gesamtbelastung an Formaldehyd aufweist. Insbesondere sollte sich die Melamin-Formaldehydharzmischung durch einen niedrigen Formaldehydgehalt auszeichnen und dennoch zu guten Mikrokapseln verarbeiten lassen. Darüberhinaus sollen die Mikrokapseldispersionen ebenfalls einen geringen Formaldehydgehalt aufweisen.

Demgemäß wurde ein Verfahren zur Herstellung von Mikrokapseln durch Polykondensation einer Melamin-Formaldehydharzmischung in Wasser, in dem das den Kapselkern bildende Material dispergiert ist, gefunden, indem man eine Melamin-Formaldehydharzmischung wählt, die sich aus
a) der wäßrigen Lösung eines Kondensationsproduktes, welches aufgebaut ist aus
   a1) 1 mol Melamin
   a2) 2 bis 5 mol Formaldehyd und
   a3) 0 bis 0,5 mol eines Melaminderivates, das mit Formaldehyd in einer Additions- oder Kondensationsreaktion reagieren kann, und
   a4) 1 bis 5 Mol eines C₁-C₃-Alkanols und
b) 0,01 bis 1 mol eines wasserlöslichen primären, sekundären oder tertiären Amins oder Ammoniak
zusammensetzt.

Methylveretherte Melamin-Formaldehydharze, die ein Molverhältnis von 6,5 bis 8 mol Formaldehyd pro mol Melamin aufweisen, sind allgemein bekannt und ein Verfahren zu ihrer Herstellung wird beispielsweise in der EP-A-0 008 683 beschrieben.

Der Formaldehyd kann dabei sowohl als Paraformaldehyd als auch bevorzugt in wäßriger Lösung eingesetzt werden.

In der Regel wird das Melamin mit einer wäßrigen, zwischen 30 und 50 Gew.-% Formaldehyd enthaltenden Formalinlösung, die auf pH-Werte von 7 bis 10 eingestellt wurde, im Molverhältnis 1 : 3,5 bis 1 : 7 über einen Zeitraum von 5 Minuten bis einer Stunde bei 60 bis 110°C methyloliert und die erhaltene Suspension des Methylolmelamins mit 10 bis 20 Mol C₁-C₃-Alkanol pro mol Melamin bei Temperaturen von 30 bis 60°C in Gegenwart einer starken Säure verethert. Da man im allgemeinen bei Normaldruck arbeitet, ist in der resultierenden Harzmischung der Formaldehydgehalt niedriger als in der Mischung der Ausgangsstoffe. Ebenso wird das Alkanol im Überschuß eingesetzt, da der veretherte Anteil niedriger ist.

Es ist dabei möglich zur Kondensationsreaktion von Melamin mit Formaldehyd 0 bis 0,5 mol pro mol Melamin eines Melaminderivates, das mit Formaldehyd in einer Addition- oder Kondensationsreaktion reagieren kann, zuzusetzen.

Hierzu eignen sich Guanamine wie Benzoguanamin und Acetoguanamin, Bisguanamine wie Adipo-, Glutaro- oder Methylolglutarobisguanamin sowie Verbindungen, welche mehrere kondensierte Aminotriazinkerne enthalten.

Als Alkohole für die Veretherung eignen sich Propanol, Ethanol und insbesondere Methanol.

Nach beendeter Veretherung wird in bekannter Weise aufgearbeitet, d.h. neutralisiert bzw. schwach alkalisch gestellt und der überschüssige Alkohol zusammen mit dem in Ansatz enthaltenen Wasser, meist unter vermindertem Druck, abdestilliert.

Als Komponente b) der Melamin-Formaldehydharzmischung sind alle wasserlöslichen primären, sekundären oder tertiären Amine sowie Ammoniak geeignet.

Geeignete Amine sind z.B.:
- Monoalkylamine wie Methylamin, Ethylamin, 3-Propylamin, Isopropylamin, Butylamin, sec.-Butylamin, Isobutylamin, 1,2-Dimethylpropylamin oder 2-Ethylhexylamin,
- Dialkylamine, wie Dimethylamin, Diethylamin, Dipropylamin, Diisopropylamin, Dibutylamin, Diisobutylamin, Di-sec-butylamin, Di-2-ethylhexylamin, N-Methyl-n-butylamin oder N-Ethyln-butylamin,
- Alkoxyalkylamine wie 2-Methoxyethylamin, Bis-2-methoxyethylamin, 3-Methoxypropylamin, 3-Ethoxypropylamin oder 3-(2-Ethylhexoxy)propylamin,
- Trialkylamine wie Trimethylamin, Triethylamin, Tri-n-propylamin, Tributylamin, N,N-Dimethylethylamin, N,N-Dimethylisopropylamin, N,N-Dimethylbenzylamin und
- Hydroxyamine wie Mono- oder Diethanolamin, Mono- oder Dipropanolamin, Mono- oder Diisopropanolamin, N-Mono- oder N,N-Di-(C₁-C₄-alkyl)ethanolamine, -propanolamine oder -isopropanolamine, wie N-Mono- oder N,N-Dimethylethanolamin, - propanolamin oder -isopropanolamin, N-Mono- oder N,N-Diethylethanolamin, -propanolamin oder -isopropanolamin, N-Mono- oder N,N-Dipropylethanolamin, -propanolamin oder -isopropanolamin, N-Mono- oder N,N-Diisopropylethanolamin, - propanolamin oder -isopropanolamin oder N-Mono- oder N,N-Dibutylethanolamin, -propanolamin oder -isopropanolamin, N-(C₁-C₄-Alkyl)diethanolamine, -dipropanolamine oder -diisopropanolamine, wie N-Methyldiethanolamin, -dipropanolamin oder -diisopropanolamin, N-Ethyldiethanolamin, - dipropanolamin oder -diisopropanolamin, N-Propyldiethanolamin, -dipropanolamin oder -diisopropanolamin, N-Isopropyldiethanolamin, -dipropanolamin oder -diisopropanolamin oder N-Butyldiethanolamin, -dipropanolamin oder -diisopropanolamin, Triethanolamin, Tripropanolamin, Triisopropanolamin, N-(2-Hydroxyethyl)pyrrolidin, N-(2- oder 3-Hydroxypropyl)-pyrrolidin, N-(2-Hydroxylethyl)piperidin, N-(2- oder 3-Hydroxypropyl)piperidin, N-(2-Hydroxyethyl)morpholin, N-(2- oder 3-Hydroxypropyl)morpholin, N-(2-Hydroxyethyl)piperazin, N-(2- oder 3-Hydroxypropyl)piperazin oder N,N-Dimethyl- oder N,N-Diethyl-N-(5-hydroxy-3-oxapentyl)amin.

Die Melamin-Formaldehydharzmischungen bestehend aus dem veretherten Kondensationsprodukt a) und einem oder mehreren wasserlöslichen primären, sekundären oder tertiären Aminen oder Ammoniak in den obengenannten Mengen, eignen sich vorteilhaft zur Herstellung von Mikrokapseln.

Bevorzugt wählt man eine Melamin-Formaldehydharzmischung eines Kondensationsproduktes a) aufgebaut aus
a1) 1 mol Melamin
a2) 2,5 bis 4,5 mol Formaldehyd und
a3) 0 bis 0,2 mol eines Melaminderivates, das mit Formaldehyd in einer Additions- oder Kondensationsreaktion reagieren kann, und
a4) 1,5 bis 4,5 eines C₁-C₃-Alkanols
und dem Amin b).

Ebenfalls bevorzugt werden Melamin-Formaldehydharzmischungen mit C₁-C₆-Alkylaminen und/oder C₁-C₆-Alkanolaminen.

Insbesondere werden solche Melamin-Formaldehydharzmischungen bevorzugt, die 0,01 bis 0,5 mol, besonders 0,01 bis 0,1 mol eines wasserlöslichen primären, sekundären oder tertiären Amins oder Ammoniak bezogen auf 1 mol Melamin enthalten.

Die Melamin-Formaldehydharzmischungen sind als Ausgangsstoffe für die Mikroverkapselung geeignet und führen zu Mikrokapseln mit guten Eigenschaften. Da diese Mischungen obendrein einen viel niedrigeren Gehalt an freiem Formaldehyd aufweisen als die herkömmlichen Ausgangsstoffe, lassen sie sich leichter handhaben. Außerdem ist mit den Melamin-Formaldehydharzen eine Mikroverkapselung in Gegenwart von verschiedenen Schutzkolloiden möglich und damit eine große Variationsbreite für das Verfahren verbunden.

Die Mikroverkapselung wird im allgemeinen so durchgeführt, daß man das einzukapselnde Kernmaterial in einer wäßrigen Lösung des anionischen Schutzkolloids und der wäßrigen Lösung des Melamin-Formaldehydharzes, die einen pH-Wert von 3 bis 6,5 aufweist, zu feinen Tröpfchen emulgiert, wobei die Tropfengröße, je nach dem vorgesehenen Anwendungszweck, eingestellt werden kann.

In diesem ersten Schritt bilden sich die Mikrokapseln aus. Ihre Hülle wird anschließend durch Erhöhung der Temperatur auf > 50°C ausgehärtet. Da es sich um eine wäßrige Dispersion handelt, soll die Härtung bis 100°C, bevorzugt 85°C als oberer Grenze durchgeführt werden. Je nach pH-Wert der Dispersion erfolgt die Härtung unterschiedlich rasch, wobei Dispersionen bei niedrigeren pH-Werten zwischen 3 und 5 optimal im Temperaturbereich von 65 bis 85°C aushärten. Oberhalb von 50°C ist jedoch auch im nur schwach sauren bis neutralen pH-Bereich die Härtung deutlich zu beobachten.

Die optimalen Temperaturen, abhängig von pH-Werte für die beiden Schritte Kapselbildung und Härtung, können durch einfache Reihenversuche leicht ermittelt werden.

Als Kernmaterial kommen für die Mikrokapseln flüssige, feste oder gasförmige, in Wasser unlösliche bis im wesentlichen ungelöste Stoffe in Betracht, z. B. sind zu nennen: Flüssigkeiten wie Alkylnaphthaline, partiell hydrierte Terphenyle, aromatische Kohlenwasserstoffe wie Xylol, Toluol, Dodecylbenzol, aliphatische Kohlenwasserstoffe, wie Benzin und Mineralöl, Chlorparaffine, Fluorkohlenwasserstoffe, natürliche Öle wie Erdnußöl, Sojaöl, außerdem Klebstoffe, Aromastoffe, Parfumöle, Monomere wie Acryloder Methacrylsäureester, Styrol, Wirkstoffe wie Pflanzenschutzmittel, roter Phosphor, anorganische und organische Pigmente, z. B. Eisenoxidpigmente; außerdem Lösungen oder Suspensionen von Farbstoffen und vor allem von Farbbildnern und Pigmenten in Kohlenwasserstoffen wie Alkylnaphthalinen, partiell hydriertem Terphenyl, Dodecylbenzol und anderen hochsiedenden Flüssigkeiten.

Als anionische Schutzkolloide werden bevorzugt wasserlösliche Homo- oder Copolymerisate mit Sulfonsäuregruppen eingesetzt. Vorzugsweise wählt man Homo- oder Copolymerisate mit Sulfonsäuregruppen, die einen K-Wert nach Fikentscher von 100 bis 170 oder eine Viskosität von 200 bis 5000 mPas aufweisen (gemessen in 20 gew.-%iger wäßriger Lösung bei 23°C mit einem Brookfield-Gerät RVT, Spindel 3, bei 50 Upm).

Bevorzugt sind Polymere mit einem K-Wert von 115 bis 150 oder deren Viskosität 400 bis 4000 mPas beträgt. Solche Schutzkolloide werden in der EP-A-0 026 914 und EP-A-0 562 344 beschrieben.

Vorteilhaft sind Polymerisate des Sulfoethyl(meth)acrylats, des Sulfopropyl(meth)acrylats, der Vinylsulfonsäure und der 2-Acrylamido-2-methylpropansulfonsäure allein als Homopolymerisate oder im Gemisch miteinander als Copolymerisate. Bevorzugt sind Polymere der 2-Acrylamido-2-methylpropansulfonsäure, da in deren Gegenwart Mikrokapseln mit sehr guten Eigenschaften gebildet werden. 2-Acrylamido-2-methyl-propansulfonsäure hat noch den Vorteil, daß diese sich leicht zu Polymeren mit gewünschten K-Werten polymerisieren läßt. Die Polymere liegen in Form der freien Säure oder vorzugsweise in Form der Alkalimetallsalze vor. Als Sulfonsäuregruppen tragende Polymere kommen außerdem Copolymere in Betracht, die aus den genannten Sulfogruppen tragenden Monomeren und C₁- bis C₃-Alkylacrylaten, Hydroxy-C₂- bis C₄-alkylacrylaten wie Methyl-, Äthyl-, n- oder i-Propylacrylat, Hydroxypropylacrylat und/oder N-Vinylpyrrolidon aufgebaut sind. Copolymerisate der 2-Acrylamido-2-methylpropansulfonsäure, Sulfoethyl- oder Sulfopropyl(meth)acrylat oder Vinylsulfonsäure werden in der EP-A-0 562 344 beschrieben, auf deren Lehre ausdrücklich Bezug genommen sei.

Besonders bevorzugte Schutzkolloide werden hiernach durch Copolymerisation von

| | |
|---|---|
| 40 - 75 Gew.-% ) | 2-Acrylamido-2-methylpropansulfonsäure, Sulfoethyl- oder Sulfopropyl(meth)acrylat oder Vinylsulfonsäure, |
| 10 - 30 Gew.-% | Acrylsäure oder Methacrylsäure, |
| 10 - 50 Gew.-% | Methyl- oder Ethylacrylat oder -methacrylat oder N-Vinylpyrrolidon und |
| 0,5 - 5 Gew.-% | Styrol, C₄-C₁₈-Alkylacrylat oder -methacrylat |

erhalten.

Von den Copolymerisaten sind solche mit 2-Acrylamido-2-methylpropansulfonsäure als Sulfogruppen tragende Comonomeren bevorzugt.

Die Sulfogruppen tragenden Homo- und Copolymerisate werden nach bekannten Verfahren hergestellt.

Die Anwendungsmenge an dem wasserlöslichen, Sulfogruppen enthaltenden Polymeren liegt in der Regel zwischen 1 und 5,5, vorzugsweise zwischen 1,5 und 4,5 Gew.-%, bezogen auf die wäßrige Phase.

Die optimale Menge an dem wasserlöslichen Sulfonsäuregruppen tragenden Polymeren wird einmal vom Polymeren selbst, zum anderen von der Reaktionstemperatur, der gewünschten Mikrokapselgröße und der Melamin-Formaldehydharzmischung beeinflußt. Durch einfache Reihenversuche kann die optimal benötigte Menge an dem wasserlöslichen Polymeren leicht ermittelt werden.

Die Dispergierung des Kernmaterials erfolgt je nach der Größe der herzustellenden Kapseln in bekannter Weise wie beispielsweise in der EP-A-0 026 914 beschrieben.

Die für den Einzelfall optimalen Bedingungen, wie Temperatur, pH-Wert und Rührergeschwindigkeit können anhand von einigen Versuchen leicht ermittelt werden.

Bei einer bevorzugten Verfahrensvariante setzt man vor der Härtung, die bei Temperaturen oberhalb 50°C stattfindet, 10 bis 200 Gew.-% Harnstoff bezogen auf das Melamin-Formaldehydharz zu. Dieser Zusatz kann sowohl vor als auch nach der Bildung der Mikrokapseldispersion geschehen. Bevorzugt dosiert man die Harnstofflösung zusammen mit der wäßrigen Lösung des anionischen Schutzkolloids zu.

Nach dem erfindungsgemäßen Verfahren können Mikrokapseldispersionen mit einem Gehalt von 15 bis 60 Gew.-% an Mikrokapseln hergestellt werden. Die Mikrokapseln sind Einzelkapseln. Durch geeignete Bedingungen bei der Dispergierung können Kapseln mit Durchmessern im Bereich von 1 bis zu 50 µm und größer hergestellt werden. Besonders vorteilhaft ist die sehr enge Größenverteilung der Kapseln. Dies gilt auch für den Bereich von 1 bis etwa 8 µm, der für die Herstellung von druckempfindlichen Aufzeichnungssystemen und Reaktionsdurchschreibepapieren besonders geeignet ist. Daher sind die nach dem Verfahren gemäß der vorliegenden Erfindung erhaltenen Kapseln auch für die Herstellung von sogenannten Zweischichtenpapieren ("self-contained papers") geeignet, bei denen der Farbbildner in Kapseln und der zur Farbbildung benötigte Elektronenacceptor übereinander oder als Gemisch auf der Papieroberfläche aufgebracht sind.

Die Kapseldispersionen sind trotz der hohen Konzentration an Kapseln und des hohen Molekulargewichts der wasserlöslichen, Sulfonsäuregruppen enthaltenden Polymeren sehr niederviskos und deshalb auch durch Maschensiebe von 25 bis 40 µm Maschenweite rasch filtrierbar. Bei der Filtration zeigt sich, daß die Ausbeute an Mikrokapseln bei dem erfindungsgemäßen Verfahren sehr hoch ist und in den meisten Fällen mehr als 98 % beträgt.

Diese neuen Mikrokapseldispersionen, insbesondere die zusätzlich mit Harnstoff behandelten, weisen einen äußerst geringen Formaldehydgehalt auf. Besonders erstaunlich ist jedoch die Tatsache, daß auch bei den Weiterverarbeitungsprodukten, wie den beschichteten Papieren, der Formaldehydgehalt ebenfalls gering ist.

Die nach dem erfindungsgemäßen Verfahren unter Verwendung der Melamin-Formaldehydharzmischungen erhaltenen neuen Mikrokapseln zeichnen sich durch ihre gute Undurchlässigkeit und die gleichmäßige Größe aus.

Die nachfolgenden Beispiele sollen das erfindungsgemäße Verfahren erläutern. Die in den Beispielen angegebenen Teile und Prozente sind, soweit nicht anders angegeben, Gewichtsteile und Gewichtsprozente.

### Verwendete Meßmethoden

### I) Messungen von Formaldehyd in Mikrokapseldispersionen nach DIN 16746

Nach diesem Meßverfahren wurde der in der fertigen (ausgehärteten) Dispersion gelöst vorliegende Formaldehyd bestimmt. Sie beruht auf der Umsetzung von Natriumsulfitlösung mit Formaldehyd und der Rücktitration mit Jodlösung. Die Prozentangabe Formaldehydgehalt bezieht sich auf die Gesamtmenge Mikrokapseldispersion.

### II) Bestimmung der Dichtigkeit einer Mikrokapseldispersion (Sprühtest)

Die Mikrokapseldispersion wurde im Verhältnis 1:1 mit Wasser verdünnt und mit der Erichson-Lackhantel (Spaltbreite 30 µm) auf die CF-Schicht eines Standard-CF-Papiers aufgetragen. Das Papier wurde 30 min bei Zimmertemperatur getrocknet. Anschließend wurde es mit Farbbildnerlösemittel aus der Sprühdose gleichmäßig, aber nicht zu stark besprüht. Nach 2 h Lagerung ohne direktes Sonnenlicht wird die entstandene Verfärbung mit einem Reflexionsphotometer (ELREPHO®, Fa. Zeiss) (Normfarbwert Y) im Vergleich zu dem unbehandelten CF-Papier gemessen. Je kleiner der Zahlenwert für die Verfärbung, desto dichter sind die Kapseln.

### III) Bestimmung der Intensität der Durchschrift eines mit einer Mikrokapselstreichfarbe beschichteten Papiers

Mit einer Streichfarbe, die durch gründliches Homogenisieren von 8,75 g Wasser, 8,25 g Mikrokapseldispersion, 1,30 g eines Celluloseschliffs als Abstandhalter (Arbocel BSM 55) und 1,30 g einer 50 gew.-%igen handelsüblichen Bindemitteldispersion auf Basis eines Copolymerisates aus Styrol und Butylacrylat (Acronal® S 320 D) erhalten wurde, wurde Papier mittels einer Drahtrakel von 24 µm Spaltweite mit einem automatischen Auftragsgerät auf ein Streichrohpapier von 50 g/m² Gewicht derart beschichtet, daß die Beschichtung 30 min nach dem Aufstreichen und Trocknen an der Luft ein Beschichtungsgewicht von ca. 8 g/m² ergibt (CB-Papier, coated back). Aus dem CB-Papier, einem Standard Phenol CF-Papier (coated front) sowie einem unbeschichteten dem Standard-Rohpapier entsprechenden Papier wurden gleich große Proben mit einer Mindestgröße von 70 x 60 mm ausgeschnitten.

Eine Probe des zu prüfenden CB-Papiers wurde mit der gestrichenen Seite nach unten auf eine mit der gestrichenen Seite nach oben liegenden Probe des Standard CF-Papiers gelegt. Darauf wurden zwei Proben des unbeschichteten Standard-Papiers gelegt. Dieser Sandwich wird in die elektrische Schreibmaschine so eingespannt, daß die Rückseite des Standard CF-Papiers auf der Schreibmaschinenwalze liegt. Die Anschlagstärke der Schreibmaschine wurde auf 3 gestellt und auf einer ca. 50 x 50 mm großen Fläche wurde der Buchstabe "w" geschrieben. Die so erhaltene Druckschrift wurde dann 30 min im Dunkeln aufbewahrt.

Anschließend wurde die Remission RY des w-Feldes des behandelten sowie eines unbehandelten CF-Papiers mit dem Reflexionsphotometer (ELREPHO, F. Zeiss) gemessen. Die Differenz wird als IG-Wert angegeben. Bei jeder Prüfung wurde auch ein Standard (Harz des Vergleichsbeispiels 2, Herstellverfahren B1, Homopolymer von 2-Acrylamido-2-methylpropansulfonsäure als Schutzkolloid) mitgeprüft. Angegeben werden in der Tabelle die IG-Wert-Differenzen zum Standard (negative Werte: weniger intensiv in Durchschrift als Standard, positive Werte: intensivere Durchschrift als Standard).

### IV) Bestimmung des Reibwertes eines mit einer Mikrokapselstreichfarbe beschichteten Papiers

a) Auf einer Unterlage aus synthetischem Leder wurde eine Probe des zu prüfenden CB-Papiers mit der gestrichenen Seite nach oben fixiert. Darauf wird mit der gestrichenen Seite nach unten eine Probe des Standard-CF-Papiers gelegt. Nun wird in der Nähe des Randes des CF-Papiers der Reibtester gestellt und mit vier Gewichten belastet. Die damit erzeugte spezifische Belastung beträgt 2,1 N/cm². Dann wird das belastete CF-Papier mit dem Reibtester über die gesamte Länge (22 cm) des CB-Papiers langsam manuell gezogen. Dabei muß seine filzbeschichtete Fläche ganzflächig auf dem Untergrund liegen. Das so behandelte CF-Papier wurde 30 min im Dunkeln aufbewahrt.

Anschließend wurde die Remission RY des so behandelten sowie eines unbehandelten Papiers gemessen. Bei jeder Prüfung wird auch der Standard (siehe IV) mitgeprüft. Angegeben werden in der Tabelle die IG-Wert-Differenzen zum Standard (negative Werte: weniger reibempfindlich als Standard, positive Werte: reibempfindlicher als Standard).

### V) Feststoffgehalt

Der in den Beispielen angegebene Feststoffgehalt wird durch Trocknung (4 Std. bei 105°C) bestimmt und setzt sich im wesentlichen aus den Mikrokapseln und dem wasserlöslichen Polymeren zusammen. Die Kapseldurchmesser wurden subjektiv unter dem Mikroskop, objektiv mit einem Malvern Sizer bestimmt. Angegeben werden die Kapseldurchmesser in µm als D(50)-Wert (50 % der Integralkurve).

Die Viskosität der Kapseldispersion wird als Auslaufzeit in Sekunden einer Dispersion aus dem DIN-Becher mit 4 mm-Düse angegeben (DIN 53211). Die Viskosität der 20 %igen Lösungen der wasserlöslichen stark saure Gruppen, z. B. Sulfonsäure enthaltenden Polymeren wurde bei 23°C mit einem Brookfield-Gerät RVT mit Spindel 3 bei 50 Upm gemessen. Der K-Wert wurde nach Fikentscher (Cellulosechemie 13 (1932) 58 ff), 0,5 %ig in Wasser, bestimmt.

### VI) Bestimmung der Reaktivität des Melamin-Formaldehydharzes

Eine Mischung aus 35 g Melamin-Formaldehydharz, 35 g Schutzkolloid und 200 g Wasser wird in einem 250 ml Becherglas unter Rühren innerhalb von 10 Minuten auf 50°C aufgeheizt. Man versetzt die Mischung anschließend mit 7,5 ml 1 gew.-%iger Ameisensäure. Die Mischung wird 15 Sekunden homogenisiert und anschließend die Zeit bestimmt bis eine sichtbare Trübung eintritt.

### Melamin-Formaldehyharzmischung

### Beispiel 1

Zu 407 Teilen einer 40 gew.-%igen wäßrigen Formaldehydlösung wurden 0,4 Teile einer 25 gew.-%igen wäßrigen Natronlauge gegeben, worauf sich ein pH-Wert von 8,2 einstellte. Nach Zugabe von 170 Teilen Melamin wurde auf 90 °C erwärmt und so lange bei dieser Temperatur gerührt, bis das Melamin klar gelöst vorlag. Nach Abkühlen auf 72 °C wurden 672 Teile Methanol zugefügt. Hierbei wurde der Kolbeninhalt milchig-trüb. Es wurden 8,1 Teile einer 30 gew.-%igen wäßrigen Salpetersäure zugesetzt und bei einem pH-Wert von 5,2 bei 50 °C 45 Min. gerührt. Nach Zugabe von 6,1 Teilen einer 25 gew.-%igen wäßrigen Natronlauge wurde ein pH-Wert von 6,9 eingestellt und unter Normaldruck bis 90 °C ca. 740 Teile Methanol/Wasser abdestilliert. Unter Anlegen eines Vakuums (ca. 80 mbar) wurden weitere 130 Teile Methanol abdestilliert. Nach Zugabe von 75 Teilen VE-Wasser und 1,3 Teilen Diethanolamin wurden 460 Teile Harz (Melamin/Formaldehyd/Methanol = 1/3,6/2,2) erhalten.

| | |
|---|---|
| Nicht flüchtige Anteile (2h/120 °C) | 70,3 % |
| Viskosität (20 °C) | 718 mPas |
| Freier Formaldehyd (DIN 16746) | 0,42 % |
| Reaktivität | 40 Min. |

### Vergleichsbeispiel 1

Zu 783 Teilen einer 40 gew.-%igen wäßrigen Formaldehydlösung wurden 0,6 Teile einer 25 gew.-%igen wäßrigen Natronlauge gegeben, worauf sich ein pH-Wert von 8,3 einstellt. Nach Zugabe von 0,5 Teilen Borax wurden 170 Teile Melamin zudosiert. Die Mischung wurde nach Aufheizen auf 80 °C solange bei der angegebenen Temperatur gerührt, bis der Inhalt eine milchig-trübe Konsistenz erreicht hatte. Es wurden 777 Teile Methanol zugesetzt und die Temperatur auf 68 °C eingestellt. Nach Zugabe von 2,9 Teilen Oxalsäure betrug der pH-Wert 3,8. Es wurde bei einer Temperatur von 68°C 20 Minuten gerührt, wobei die Lösung klar wurde. Nach Zugabe von 11,0 Teilen einer 25 gew.-%igen wäßrigen Natronlauge stellte sich ein pH-Wert von 7,8 ein. Zwischen 60 - 100°C wurden ca. 1250 ml Methanol/Wasser abdestilliert. Nach Erreichen von 100 °C wurde weitere 10 Min. bei dieser Temperatur gerührt. Nach Anlegen eines Vakuums von ca. 80 mbar wurden weitere 60 ml abdestilliert, wobei die Innentemperatur auf 50 °C absank. Durch Zugabe von 57 Teilen VE-Wasser wurde die Viskosität in den Bereich zwischen 200 - 350 mPas gebracht. Es wurden 585 Teile Harz (Melamin/Formaldehyd/Methanol = 1/5,3/3,4) erhalten.

| | |
|---|---|
| Nicht flüchtige Anteile (2h/120 °C) | 74,1 % |
| Viskosität (20 °C) | 308 mPas |
| Freier Formaldehyd (DIN 16746) | 3,25 % |
| Reaktivität | 67 Min. |

### Vergleichsbeispiel 2

Zu 407 Teilen einer 40 gew.-%igen wäßrigen Formaldehydlösung wurden 0,4 Teile einer 25 gew.-%igen, wäßrigen Natronlauge gegeben, worauf sich ein pH-Wert von 8,2 einstellte. Nach Zugabe von 170 Teilen Melamin wurde bis auf 90 °C erwärmt und so lange bei der angegebenen Temperatur gerührt, bis das Melamin klar gelöst vorlag. Nach Abkühlen auf 72 °C wurden 672 Teile Methanol zugefügt. Hierbei wurde der Kolbeninhalt milchig-trüb. Es wurden 8,1 Teile einer 30 gew-%igen wäßrigen Salpetersäure zugesetzt und bei einem pH-Wert von 5,2 bei 50 °C 45 Min. gerührt. Nach Zugabe von 6,1 Teilen einer 25 gew.-%igen wäßrigen Natronlauge wurde ein pH-Wert von 6,9 eingestellt und unter Normaldruck bis 90 °C ca. 740 Teile Methanol/Wasser abdestilliert. Im Vakuum (ca. 80 mbar) wurden weitere 130 Teile Methanol abdestilliert. Nach Zugabe von 75 Teilen VE-Wasser wurden 460 Teile Harz (Melamin/Formaldehyd/Methanol = 1/3,6/2,2) erhalten.

| | |
|---|---|
| Nicht flüchtige Anteile (2h/120 °C) | 70,3 % |
| Viskosität (20 °C) | 718 mPas |
| Freier Formaldehyd (DIN 16746) | 0,46 % |
| Reaktivität | 20 Min. |

### Allgemeine Vorschrift zur Herstellung von Mikrokapseldispersionen

### A) Herstellung der Farbbildnerlösung

In einem Becherglas bzw. Vorlagegefäß wurden 385 g eines Lösemittelgemischs bestehend aus 80 Gew.-% Diisopropylnaphthalin (KMC Öl von RKS) und 20 Gew.-% einer Verdünnungskomponente (Shellsol D 100) vorgelegt und gerührt. Zu dieser Mischung wurden 15 g eines blauschreibenden Farbbildnergemischs (Pergascript® Blau I-2RN, Pergascript Blau S-RB und Pergascript Rot I-6B, Fa. CIBA) gegeben und die Mischung unter Rühren bis auf ca. 105 °C erhitzt. Die klare Lösung wurde noch weitere 45 min bei ca. 100 °C gehalten.

Für eine schwarzschreibende Farbbildnerlösung wurde gemäß obiger Vorschrift mit den folgenden Einsatzstoffen eine Lösung hergestellt: 380 g eines Lösemittelgemisches aus 70 Gew-% Diisopropylnaphthalin (KMC Öl) und 30 Gew.-% einer Verdünnungskomponente (Shellsol D 100) und 20 g eines schwarzdurchschreibenden Farbbildnergemischs (z.B. Pergascript Blau I-2RN, Pergascript Grün I-2GN, Pergascript Schwarz I-R und Pergascript Rot I-6B).

### B1) Herstellung einer 40 gew.-%igen Dispersion

In ein zylindrisch geformtes 2 1-Rührgefäß mit eingebautem Hochleistungsdispergieraggregat wurden unter langsamem Rühren 580 g Wasser (demineralisiert oder Trinkwasser), 80 g einer 20 Gew.-%igen wäßrigen Lösung eines Schutzkolloids, 86 g einer 70 Gew.-%igen wäßrigen Lösung der Melamin-Formaldehydharzmischung gegeben.

Anschließend wurde die Drehzahl des Dissolvers so stark erhöht, daß eine gute Durchmischung erzielt wurde. Immer noch unter Durchmischung wurde nun 400 g Farbbildnerlösung langsam zugegeben. Es wurde auf 28 - 30 °C temperiert und die Dissolverdrehzahl auf 6000 Upm gestellt. Anschließend wurden 16 g 10 gew.-%ige Ameisensäure zugegeben, wobei sich ein pH-Wert von 3,6 bis 3,8 einstellte. Nach ungefähr 35 - 45 min bildeten sich Kapseln. Sobald die gewünschte Kapselgröße erreicht war, wurde die Umdrehungszahl des Dissolvers auf 2000 Upm gesenkt und die Kapseldispersion eine weitere Stunde bei 28 - 30°C und 2000 Upm gerührt.

Zur Härtung wurde die Kapseldispersion auf 75°C aufgeheizt und bei Erreichen der Temperatur zwei Stunden bei 75°C gehalten. Nach Beendigung der Härtezeit wurde der Ansatz auf etwa 40°C abgekühlt und durch Zugabe von 6 g NaOH (50 gew.-%ig) oder 14,2 g Diethanolamin (80 %ig) neutral gestellt.

### B2) Herstellung einer 50 gew.-%igen Dispersion

In ein zylindrisch geformtes 2 l-Rührgefäß mit eingebautem Hochleistungsdispergieraggregat wurden unter langsamem Rühren 400 g Wasser, 100 g einer 20 gew.-%igen wäßrigen Lösung eines Schutzkolloids, 110 g einer 70 gew.-%igen wäßrigen Lösung des Melamin-Formaldehydharzmischung gegeben.

Nun wurde die Drehzahl des Dissolvers so stark erhöht, daß eine gute Durchmischung erzielt wurde. Immer noch unter Durchmischung wurde nun 500 g Farbbildnerlösung langsam zugegeben. Es wurde auf 28 - 30 °C temperiert und die Dissolverdrehzahl auf 6000 Upm gestellt. Anschließend wurden X g 10 gew.-%ige Ameisensäure zugegeben und die Dissolverdrehzahl auf 3000 Upm verringert. Nach ungefähr 20 min. bildeten sich Kapseln. Sobald die gewünschte Kapselgröße erreicht war, wurde die Umdrehungszahl des Dissolvers auf 2000 Upm gesenkt und die Kapseldispersion eine halbe Stunde bei 28 - 30°C und 2000 Upm gerührt.

Zur Härtung wurde die Kapseldispersion auf 75°C aufgeheizt und bei Erreichen der Temperatur zwei Stunden bei 75°C gehalten. Nach Beendigung der Härtezeit wurde der Ansatz auf etwa 40°C abgekühlt und durch Zugabe von 6,5 g NaOH (50 gew.-%ig) oder 17,2 g Diethanolamin (80 gew.-%ig) neutral gestellt.

Es wurden sowohl 40 gew.-%ige als auch 50 gew.-%ige Kapseldispersionen hergestellt. Es wurden auch sowohl blau- als auch schwarzschreibende Kapseln geprüft.

### Beispiele 2 - 6

Gemäß Herstellverfahren B2 wurden 50 gew.-%ige Dispersionen hergestellt mit der in Tabelle 1 angegebenen Menge Ameisensäure. Entsprechend wurden zur abschließenden Neutralisierung der Kapseldispersion nur 4 - 5 g 50 gew.-%ige Natronlauge benötigt. Die eingesetzten Melamin-Formaldehydharzmischungen wurden gemäß Beispiel 1 mit den jeweils in der Tabelle 1 aufgeführten Aminen hergestellt.

### Beispiel 7

Gemäß Herstellvorschrift B1 wurde eine 40 gew.-%ige Dispersion hergestellt.

Als Melamin-Formaldehydharzmischung wurde das Harz des Beispiels 1 (1/3,6/2,2) gewählt, dem jedoch 1,3 Teile Triethanolamin zugesetzt wurden.

**Tabelle 1:**

| Anwendungstechnische Daten der Mikrokapseldispersionen der Beispiele 2 - 7 | | | | | | | | |
|---|---|---|---|---|---|---|---|---|
| Bsp. | Amin | Schutzk. | HCOOH 10%ig [g] | D50 [µm] | I [%] | II IG | III IG | IV IG |
| 2 | TEA | S | 19 | 4,7 | 0,78 | 1,8 | -1 | -6 |
| 3 | DEA | S | 18 | 4,3 | 0,74 | 2,0 | -2 | -7 |
| 4 | DEEA | S | 15 | 5,6 | 0,76 | 5,4 | 1 | 4 |
| 5 | TEA | S | 15 | 4,7 | 0,68 | 6,6 | 1 | 3 |
| 6 | DEA | S | 14 | 5,1 | 0,68 | 4,7 | 2 | 2 |
| 7 | TEA | PA | 10 | 11,3 | 0,62 | 2,4 | | |
| TEA = Triethanolamin | | | | | | | | |
| DEA = Diethanolamin | | | | | | | | |
| DEEA= Diethylethanolamin | | | | | | | | |
| PA = Polymer von 2-Acrylamido-2-methylpropansulfonat (Na-Salz) gemäß Bsp. 1, EP-A-0 026 914) Viskosität: 1000 mPas, K-Wert: 155 als Schutzkolloid | | | | | | | | |
| S = Copolymer aus 2-Acrylamido-2-methylpropansulfonat, Methylacrylat, Acrylsäure und Styrol (gemäß Bsp. 1, EP-A-0 562 344) | | | | | | | | |
| I = Formaldehydgehalt nach DIN 16746 | | | | | | | | |
| II = Sprühtest (Dichtigkeit der Mikrokapseln) | | | | | | | | |
| III = Intensität der Durchschrift | | | | | | | | |
| IV = Reibwert | | | | | | | | |

### Vergleichsbeispiele V3 und V4

Analog den Beispielen 2 - 7 wurde eine Mikroverkapselung durchgeführt, jedoch ohne die erfindungsgemäße Melamin-Formaldehydharzmischung sonders stattdessen mit dem Melamin-Formaldehydharz des Vergleichsbeispiels V2 (Melamin/Formaldehyd/Methanol = 1/3,6/2,2). Die Mikrokapseldispersion bildete Schaum.

**Tabelle 2**

| Bsp. | UPM | Schutzk. | HCOOH [g] | D50 [µm] | I [%] | II IG | III IG | IV IG |
|---|---|---|---|---|---|---|---|---|
| V3 | 5000 | S | 11 | 5,0 | - | 2,7 | 0,0 | -4,4 |
| V4 | 4000 | S | 10 | 3,9 | 0,63 | 1,7 | -2,2 | -5,0 |
| UPM = Umdrehungen pro Minute | | | | | | | | |

### Vergleichsbeispiel V5

Eine analog Beispiel 7 durchgeführte Mikroverkapselung ebenfalls mit dem Polymer von 2-Acrylamido-2-methylpropansulfonat als Schutzkolloid koagulierte nach 40 Minuten, obwohl die Kapseln mit einer höheren Drehzahl hergestellt werden.

### Vergleichsbeispiele V6 und V7

Gemäß Herstellvorschrift B1 wurde eine 40 gew.-%ige Dispersion hergestellt. Als Melamin-Formaldehydharz wurde das Harz des Vergleichsbeispiels V1 (1/5,3/3,4) gewählt.

**Tabelle 3**

| Bsp. | Schutzk. | D50 [µm] | I [%] | II IG | III IG | IV IG |
|---|---|---|---|---|---|---|
| V6 | PA | - | 1,06 | 3,6 | - | - |
| V7 | PA | 5,9 | 1,12 | 3,9 | -1,4 | -2,2 |

## Patentansprüche

1. Verfahren zur Herstellung von Mikrokapseln durch Polykondensation einer Melamin-Formaldehydharzmischung in Wasser, in dem das den Kapselkern bildende Material dispergiert ist, in Gegenwart eines anionischen Schutzkolloids, **dadurch gekennzeichnet, daß** sich die Melamin-Formaldehydharzmischung zusammensetzt aus:
a) der wäßrigen Lösung eines Kondensationsproduktes, welches aufgebaut ist aus
a1) 1 mol Melamin
a2) 2 bis 5 mol Formaldehyd und
a3) 0 bis 0,5 mol eines Melaminderivates, das mit Formaldehyd in einer Additions- oder Kondensationsreaktion reagieren kann und
a4) 1 bis 5 mol eines C₁-C₃-Alkanols und
b) 0,01 bis 1 mol eines wasserlöslichen primären, sekundären oder tertiären Amins oder Ammoniak.

2. Verfahren nach Anspruch 1, **dadurch gekennzeichnet, daß** man für die Melamin-Formaldehydharzmischung ein Kondensationsprodukt wählt, welches aufgebaut ist aus
a1) 1 mol Melamin
a2) 2,5 bis 4,5 mol Formaldehyd und
a3) 0 bis 0,2 mol eines Melaminderivates, das mit Formaldehyd in einer Additions- oder Kondensationsreaktion reagieren kann, und
a4) 1,5 bis 4,5 mol eines C₁-C₃-Alkanols.

3. Verfahren nach Anspruch 1 oder 2, **dadurch gekennzeichnet, daß** man für die Melamin-Formaldehydharzmischung ein C₁-C₆-Alkylamin und/oder C₁-C₆-Alkanolamin wählt.

4. Verfahren nach den Ansprüchen 1 bis 3, **dadurch gekennzeichnet, daß** man als anionisches Schutzkolloid ein Copolymer, enthaltend
| | |
|---|---|
| 40 bis 75 Gew.-% | 2-Acrylamido-2-methylpropansulfonsäure, Sulfo-ethyl- oder Sulfopropyl(meth)acrylat oder Vinylsulfonsäure |
| | |
| 10 bis 30 Gew.-% | Acrylsäure oder Methacrylsäure, |
| | |
| 10 bis 50 Gew.-% | Methyl- oder Ethyl-acrylat oder -methacrylat oder N-Vinylpyrrolidon und |
| | |
| 0,5 bis 5 Gew.-% | Styrol, C₄ -C₁₈ -Alkylacrylat oder C₁ -C₁₈ -Alkylmethacrylat |
einsetzt.

5. Verfahren nach den Ansprüchen 1 bis 4, **dadurch gekennzeichnet, daß** man vor der Härtung, die bei Temperaturen oberhalb 50°C stattfindet, 10 bis 200 Gew.-% Harnstoff bezogen auf das Melamin-Formaldehydharz zusetzt.

6. Mikrokapseln erhältlich gemäß den Verfahren der Ansprüche 1 bis 5.

7. Verwendung der Mikrokapseln gemäß Anspruch 6 zur Herstellung von druckempfindlichen Aufzeichnungssystemen.

## Claims

1. A process for the preparation of microcapsules by polycondensation of a melamine/formaldehyde resin mixture in water, in which the material forming the capsule core is dispersed, in the presence of an anionic protective colloid, wherein the melamine/formaldehyde resin mixture is composed of:
a) an aqueous solution of a condensate which is composed of
a1) 1 mol of melamine,
a2) from 2 to 5 mol of formaldehyde and
a3) from 0 to 0.5 mol of a melamine derivative which can undergo an addition or condensation reaction with formaldehyde and
a4) from 1 to 5 mol of a C₁-C₃-alkanol and
b) from 0.01 to 1 mol of a water-soluble primary, secondary or tertiary amine or ammonia.

2. The process according to claim 1, wherein a condensate which is composed of
a1) 1 mol of melamine,
a2) from 2.5 to 4.5 mol of formaldehyde and
a3) from 0 to 0.2 mol of a melamine derivative which can undergo an addition or condensation reaction with formaldehyde and
a4) from 1.5 to 4.5 mol of a C₁-C₃-alkanol
is chosen for the melamine/formaldehyde resin mixture.

3. The process according to claim 1 or 2, wherein a C₁-C₆-alkylamine and/or C₁-C₆-alkanolamine is chosen for the melamine/formaldehyde resin mixture.

4. The process according to any of claims 1 to 3, wherein the anionic protective colloid used is a copolymer comprising
from 40 - 75% by weight of 2-acrylamido-2-methylpropanesulfonic acid, sulfoethyl or sulfopropyl (meth)acrylate or vinylsulfonic acid,
from 10 - 30% by weight of acrylic acid or methacrylic acid,
from 10 - 50% by weight of methyl or ethyl acrylate or methacrylate or N-vinylpyrrolidone and
from 0.5 - 5% by weight of styrene, C₄-C₁₈-alkyl acrylate or C₄-C₁₈-alkyl methacrylate.

5. The process according to any of claims 1 to 4, wherein from 10 to 200% by weight, based on the melamine/formaldehyde resin, of urea are added before the hardening, which takes place at above 50°C.

6. A microcapsule obtainable by a process of any of claims 1 to 5.

7. The use of microcapsules according to claim 6 for the production of pressure-sensitive recording systems.

## Revendications

1. Procédé de préparation de microcapsules par polycondensation d'un mélange de résines de mélamine-formaldéhyde dans de l'eau, en présence d'un colloïde protecteur anionique, **caractérisé en ce que** le mélange de résines de mélamine-formaldéhyde se compose de:
a) la solution aqueuse d'un produit de condensation constitué de:
a₁) 1 mole de mélamine
a₂) 2 à 5 moles de formaldéhyde et
a₃) 0 à 0,5 mole d'un dérivé de mélamine capable de réagir avec le formaldéhyde en une réaction d'addition ou de condensation et
a₄) 1 à 5 moles d'un alcanol en C₁ à C₃ et
b) de 0,01 à 1 mole d'ammoniac ou d'une amine primaire, secondaire ou tertiaire soluble dans l'eau.

2. Procédé selon la revendication 1, **caractérisé en ce que** l'on choisit pour le mélange de résines de mélamine-formaldéhyde un produit de condensation constitué de
a₁) 1 mole de mélamine
a₂) 2,5 à 4,5 moles de formaldéhyde et
a₃) 0 à 0,2 mole d'un dérivé de mélamine capable de réagir avec le formaldéhyde en une réaction d'addition ou de condensation et
a₄) 1,5 à 4,5 moles d'un alcanol en C₁ à C₃.

3. Procédé selon la revendication 1 ou 2, **caractérisé en ce que** l'on choisit pour le mélange de résines de mélamine-formaldéhyde une alkyl(C₁-C₆)amine et/ou une alcanolamine en C₁ à C₆.

4. Procédé selon les revendications 1 à 3, **caractérisé en ce que** l'on met en oeuvre comme colloïde protecteur anionique un copolymère contenant
40 à 75% en poids d'acide 2-acrylamido-2-méhylpropane-sulfonique, de (méth)acrylate de sulfoéthyle ou de sulfopropyle ou d'acide vinylsulfonique
10 à 30% en poids d'acide acrylique ou d'acide méthacrylique,
10 à 50% en poids d'acrylate ou de méthacrylate de méthyle ou d'éthyle, ou de N-vinylpyrrolidone,
0,5 à 5% en poids de styrène, d'acrylate d'alkyle en C₄ à C₁₈ ou de méthacrylate d'alkyle en C₁ à C₁₈.

5. Procédé selon les revendications 1 à 4, **caractérisé en ce que**, avant le durcissement, qui a lieu à une température de plus de 50°C, on ajoute de 10 à 200% en poids d'urée, par rapport à la résine de mélamine-formaldéhyde.

6. Microcapsules que l'on peut selon le procédé des revendications 1 à 5.

7. Utilisation des microcapsules selon la revendication 6 pour la préparation de systèmes d'enregistrement sensibles à la pression.
